# EUROPEAN PATENT APPLICATION

(11) **EP 4 283 471 A1**
(43) Date of publication of application: **29.11.2023**
(21) Application number: 22175560.6
(22) Date of filing: 25.05.2022
(51) Int. Cl.: G06F 11/36

(54) **FRAMEWORK FOR EXECUTING UNIT TESTS ON SMARTCARDS**

(71) Applicant: Giesecke+Devrient ePayments GmbH, 81677 München (DE)
(72) Inventor: Stocker, Thomas, 81739 München (DE); Treger, Jörn, 83022 Rosenheim (DE); Papatola, Anja, 83714 Miesbach (DE); Seitz, Arthur, 83109 Großkarolinenfeld (DE); Elsabbahy, Sherif, 81675 München (DE)
(74) Representative: Giesecke + Devrient IP

(57) **Abstract**

A framework and a method for executing unit tests on a test target, such as a smart-card, are provided. The test framework comprises a unit-test interface module, which is configured to store off-card representations of a plurality of test target functions and/or methods under test, the off-card representations being generated by a build step and configured to perform remote procedure calls to the test target to cause execution of unit tests for the test target functions and/or methods under test on the test target.

## Description

The present invention relates generally to software testing, and more specifically to exemplary embodiments of a framework and method for executing unit tests on smartcards.

### BACKGROUND OF THE INVENTION

Smartcards have been used throughout the world in a variety of applications. A smartcard is a card with an embedded integrated circuit (IC), often referred to as a chip or microprocessor. Used for products such as credit and debit cards, transport cards, SIM cards, Identifications cards etc. the embedded IC provides data storage, additional security and functionality.

These kind of applications put high requirements on the quality of smartcard devices, in particular on properties like safety, security, and interoperability. In particular, on smartcard devices where multiple applications can dynamically be incorporated on a single device, many forms of intended and unintended interaction between those applications may occur and impact the reliability of the smartcard device.

With the continuous development of the software industry in general and of software applications for smartcards in particular, software testing plays a more and more important role in assessing reliability of software.

Testing is an important, in practice even the dominating technique to check the correctness of systems. Testing consists of performing, in a controlled way, calls on a system or device under test in order to see whether the system or device has the desired properties.

For testing purposes, a test driver or test harness is usually employed. The test harness typically includes a user interface, a sequentially automatic execution scripts, an automatic matching for expected results, and a pass/fail test report. In operation, a test harness typically runs an executable test suite, which comprises code and data, to be executed on the implementation under test (IUT) or device under test (DUT). Typically, a test suite comprises several logically grouped test cases, whereas each test case defines a single function to be tested such that the implementation under test must yield a pass/fail answer. The test suite can be executed upon a particular hardware/software platform or target machine, as for instance a personal computer.

A unit-test framework refers to a testing methodology, a set of methods invoked to test an object (e.g. implementation/software), and a user interface to report results of the tests whether favorable or unfavorable. The executable tests are also referred to as "unit tests".

Software or implementation under test may be for instance an operating system, OS, of a smartcard, or an application (or applet) running on the smartcard.

Existing solutions for smartcard testing include executing unit tests either on the PC or on the smartcard, as they require the software under test and the test framework to run on the same target machine. That is, the software under test and the test framework must run within the same location, for instance, (1) both on the same personal computer PC, or (2) both on the smartcard.

Testing on the PC requires that an emulation or simulation of the smartcard software to be tested be created on the PC on which the test framework is stored. Unit tests are then executed only on this smartcard simulation running on the PC and not on the real smartcard. Due to various architectural and design differences of existing hardware platforms, testing on PC simulations usually disregards several important hardware specific conditions, which poses a limitation to the testing frameworks abilities, e.g. to test hardware-dependent features.

Testing on the test target, in particular a smartcard, requires to store a complete test framework and the code under test in the smartcard. Due to the limited smartcard resources (non-volatile memory and RAM) it is quite difficult to locate the complete functionality of a smartcard as well as the required unit-test code within the smartcard memory. It is even more difficult to execute these tests on the smartcard under similar conditions (e.g. resource limitations) as in real-life use-cases.

Furthermore, testing native-coded smartcard functionalities requires using dedicated unit-test frameworks that are based on native code. Such dedicated test frameworks are however limited in their functionality. Due to their cumbersome nature they demand a rather high effort to get familiar with them. Moreover, testing both Java code and native code requires the use of different unit-test frameworks.

It is therefore desirable to provide a solution to the above mentioned drawbacks, which eliminates the problem of the restriction that testing code and code under test have to be loaded and executed on the same target, that being the PC or the smartcard.

### SUMMARY OF THE INVENTION

The present invention addresses the above object by the subject-matter covered by the independent claims. Preferred embodiments of the invention are defined in the dependent claims.

According to a first aspect of the present invention, there is provided a test framework for executing unit tests on a test target within a device under test. The device under test may be a smartcard. The test framework comprises a unit-test interface module, which is configured to store off-card representations of a plurality of test target functions and/or methods under test, the off-card representations being generated by a build step and configured to perform remote procedure calls to the test target to cause execution of unit tests for the respective function and/or method under test on the test target.

Such a test framework eliminates the restriction that testing code and code under test have to be loaded and executed on the same target, that being the PC or the smartcard. The test framework allows to write unit tests, specifically customized to a method/function under test, using existing public test frameworks (e.g., JUnit and Spock) on general purpose PC machines and to call for executing the actual unit-test on any target hardware.

In some embodiments of the present invention according to the first aspect, the off-card representations are wrapper methods generated based on input received from the test target. Preferably, the wrapper methods are generated as Java methods.

By storing the off-card representations of the functions/methods under test within the off-card test framework it is possible to address a particular function/method under test (which is located at the test target) directly from the off-card test framework.

Preferably, the input received from the test target comprises at least sources (for instance, Java sources) of a test target operating system, or native header files, or source file configuration of/for the test target.

This allows to create a wrapper for each source file and native headers that is visible to the unit-test build. By construction, the wrapper methods have cloned signatures of their original functions/methods, allowing thus to build robust unit-tests to address remotely located functions/methods under test in a feasible and efficient way.

In some embodiments of the present invention according to the first aspect, the wrapper methods are configured to provide an interface to the functions and/or methods under test, and to encapsulate the remote procedure calls to the test target.

In some embodiments of the present invention according to the first aspect, the test framework comprises further a unit-test client communicatively coupled to the unit-test interface module, wherein the unit-test client is configured to receive the remote procedure calls from the unit-test interface module, to encode the remote procedure calls to a message, and to send the message to a unit-test server located on the test target.

Preferably, the unit-test client is configured to send the message to the test target through test specific APDU commands.

That is, the unit-test client implements the communication between the off-card test framework and the on-card test target.

In some embodiments of the present invention according to the first aspect, the test framework comprises further a unit-test module for unit-test execution communicatively coupled to the unit-test interface module, and a basic functionality module within the unit-test interface providing basic functionality to the unit-test module for executing unit tests, wherein the basic functionality includes library methods for data structure access and exception handlings.

This allows to use available state of the art unit-test frontends, such as Spock or JUnit, for writing unit tests for remotely testing of Java and native code at the test target.

According to a second aspect of the present invention, there is provided a distributed test framework for executing unit tests on a test target. The distributed test framework comprises the test framework according to the first aspect, as an off-card test framework, and an on-card test framework at the test target.

Such a distributed test framework allows to unite unit-tests that are written with a well-established unit-test framework with the functional unit (method/function) to be tested directly on the test target.

In some embodiments of the present invention according to the second aspect, the on-card test framework comprises a unit-test server communicatively coupled to the unit-test client of the off-card test framework. The unit-test server is being configured to receive from the unit-test client test specific APDU commands comprising messages; to decode the messages; to create a function and/or method call corresponding to the function and/or method under test; and to perform the function and/or method call on the test target.

In some embodiments of the present invention according to the second aspect, the unit-test server is further configured upon performing the function and/or method call on the test target to send values obtained from the function and/or method call within APDU commands to the unit-test client.

Preferably, the values comprise exceptions indicating a failed function and/or method call at the test target.

By coupling the unit-test client with the unit-test server through APDU command exchange, an efficient way for implementing distributed unit-testing for smartcard functionality is provided.

According to a third aspect of the present invention, a method for executing a unit test for a method and/or function under test on a test target is provided. The test target is located on a device under test, in particular a smartcard. The method comprises at an off-card device creating an off-card representation of the method and/or function under test; and performing by the off-card representation a remote procedure call to the test target to cause execution of a unit test for the function and/or method under test on the test target.

In some embodiments of the present invention according to the third aspect, the off-card representation of the method and/or function under test is created as a wrapper method based on input received from the test target, in particular, based on at least sources of a test target operating system, or native header files, or source file configuration of/for the test target.

This provides the ability to access to any native function and method of the test target by automatic stub generation.

Preferably, the remote procedure call is performed by the wrapper method by invoking an off-card unit-test client for encoding the remote procedure call to a message, and sending the message to a unit-test server located on the test target, preferably through test specific APDU commands.

This supports hardware-in-the-loop by porting the framework hardware layer (unit-test server and client layers) and the communication protocol to the target hardware.

In some embodiments of the present invention according to the third aspect, the method comprises, at the test target, receiving the remote procedure call as a test specific APDU command comprising a message; decoding the message; creating based on the decoded message, a function and/or method call corresponding to the function and/or method under test; and performing the function and/or method call on the test target.

In some embodiments of the present invention according to the third aspect, the method further comprises, at the test target, sending results obtained from the performed function and/or method call within APDU commands to the off-card device. Preferably, the results are sent by the unit-test server on the test target to the unit-test client at the off-card test framework.

In some embodiments of the present invention according to the first, second or third aspect, the test target is a variant of an operating system of a device under test, in particular a smartcard or Java card, the test target comprising source code modifications of the operating system, such as dispatching APDU commands, the modifications being handled by pre-compiler directives.

This allows to modify the software to be tested, through adaptations, that make it easier for the test framework to apply the unit tests to the modified software, i.e., the test target, to efficiently test the functionality of the methods/functions under test.

It has to be noted that all the devices, elements, units and means described in the present application could be implemented in software or hardware elements or combination thereof. All steps which are performed by the various entities described in the present application as well as the described functionalities are intended to mean that the respective entity is adapted to or configured to perform the respective steps and functionalities.

Further aspects, features and advantages of the present invention will become apparent to those of ordinary skills in the art upon reviewing the following detailed description of preferred embodiments and variants of the present invention in conjunction with the accompanying figures.

### BRIEF DESCRIPTION OF THE DRAWINGS

Reference will now be made to the accompanying figures, in which:
FIG. 1 shows a simplified schematic diagram of a testing architecture on which a distributed test framework according to an embodiment of the invention, can be implemented;
FIG. 2 shows a schematic diagram of the distributed test framework, according to an embodiment of the invention;
FIG. 3 shows a schematic diagram of a dynamically built distributed test framework, according to an embodiment of the invention;
FIG. 4 shows a flowchart for a method for executing a unit test on the distributed framework in Fig. 2, according to an embodiment of the invention; and
FIG. 5 shows a flowchart for a preferred implementation of the off-card part of the method in Fig. 4, according to an embodiment of the invention.

### DETAILED DESCRIPTION

Detailed explanations of the present invention are given below with reference to attached drawings that illustrate specific embodiment examples of the present invention. These embodiments are described in sufficient detail to enable those skilled in the art to practice the invention. It is to be understood that the various embodiments of the present invention, although different, are not necessarily mutually exclusive. For example, a particular feature, structure, or characteristic described herein in connection with one embodiment may be implemented within other embodiments without departing from the scope of the present invention. In addition, it is to be understood that the position or arrangement of individual elements within each disclosed embodiment may be modified without departing from the scope of the present invention. The following detailed description is, therefore, not to be taken in a limiting sense, and the scope of the present invention is defined only by the appended claims, appropriately interpreted, along with the full range of equivalents to which the claims are entitled. In the drawings, like numerals refer to the same or similar functionality throughout the several views.

Throughout this specification, the expression "off-card" refers to a testing device, whereas the expression "on-card" identifies the device under test. An off-card device may be a personal computer, PC, on which the testing code, as part of the test harness, is stored and executed. An "on-card" device may be a Java Card or a smartcard, preferably accessed through a suitable card reading device. The on-card device comprises the code under test, also referred to as "test target".

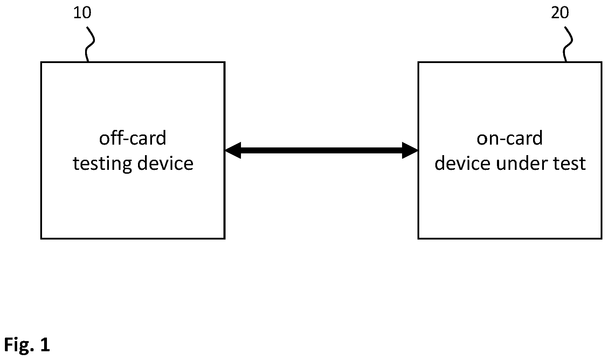

Fig. 1 shows a schematic diagram of a testing architecture on which a distributed test framework according to an embodiment of the invention, can be implemented. The testing architecture involves two devices for test execution to test a desired functionality on a test target, namely, a testing device 10 and a device under test 20. To emphasize the different locations of both devices, the testing device is also referred to as being "off-card", while the device under test is also referred to as "on-card device".

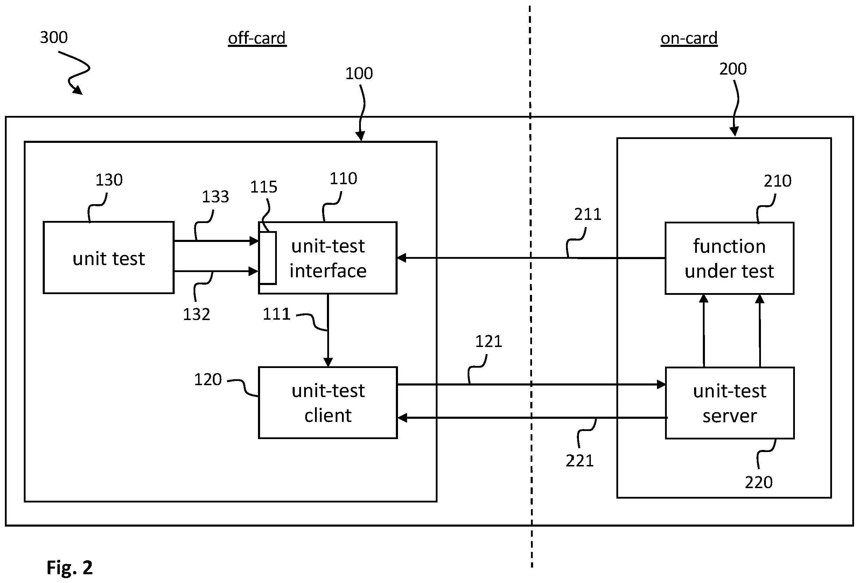

Fig. 2 shows a detailed schematic diagram of the distributed test framework 300, according to an embodiment of the invention. The distributed test framework 300 may be implemented on the testing architecture in Fig. 1.

In one exemplary embodiment, the distributed test framework 300 includes an off-card test framework 100, located on the off-card testing device 10, and an on-card test framework 200, located on the on-card device under test 20. Throughout this specification, the on-card test framework 200 may be also referred to interchangeably as test target, while the expression "test framework" without explicitly mentioning "off-card" refers to the off-card part of the distributed test framework.

The off-card test framework 100 may be a test framework located on a PC (the off-card testing device 10).

The off-card test framework 100 may comprise two parts, an execution framework (i.e, unit-test module identified by reference numeral 130 in Fig. 2) and a dynamically built test framework (i.e., unit-test interface identified by reference numeral 110 in Fig. 2). Preferably, the execution framework 130 (also referred to as the unit-test module) comprises all needed functionality, such that unit tests, in particular smartcard related unit tests, can be executed in a convenient way. Such basic functionality may comprise library methods to access data structures and handling of exceptions, among others.

One of the main components of the distributed test framework 300 is the unit-test interface module 110, the dynamically built test framework part, generated during build time. The unit-test interface module 110 provides the interface for the basic execution framework to call functions and methods remotely on the on-card device/test target for executing tests thereon. In particular, the unit-test interface module 110 provides the interface between the off-card testing device 10 and the device under test 20, that is, the interface between the unit test module 130 and the function or method under test on the test target 200.

In one embodiment, the unit-test interface module 110 is configured to store off-card representations of a plurality of test target functions and/or methods under test. The off-card representations may be generated at the testing device 10 by a build step. The off-card representations may be generated as Java methods, so-called wrappers. The wrapper methods have cloned signatures of their original functions/methods. That is, all interfaces containing functions and methods that should be tested are located duplicated in the unit-test interface module 110.

The implementation of the wrapper methods may perform remote procedure calls 111 to the test target 200 to cause execution of unit tests for the respective function and/or method under test on the test target 200.

The off-card representations allow thus to remotely address from the off-card unit test module 130 a function/method under test on the test target. This provides the advantage that the testing code and the code under test do not have to be loaded and executed on the same device, that being the PC or the device under test, e.g., a smartcard.

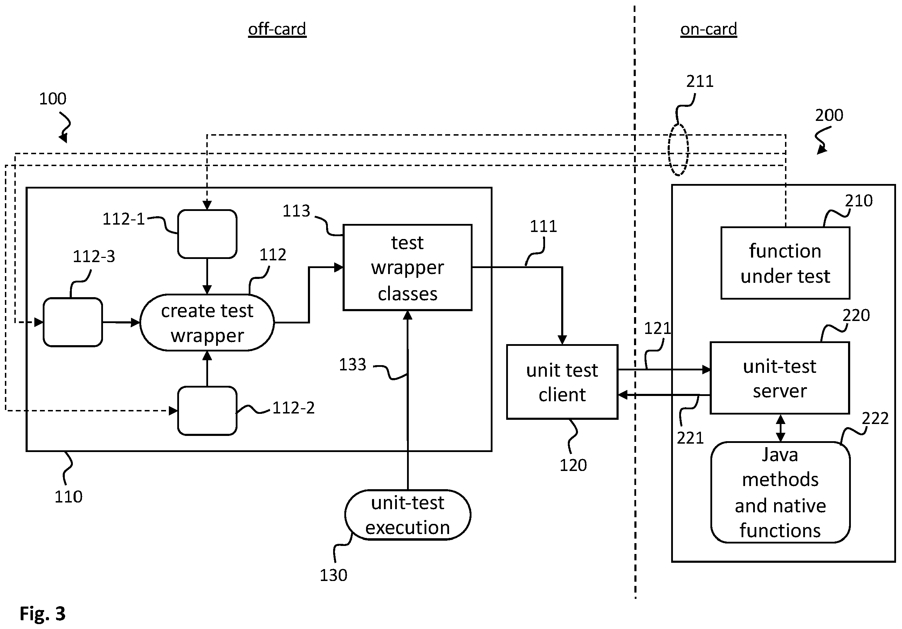

The dynamically built unit test framework/unit test interface module 110 may implement an automatic stub generation mechanism, which provides the ability to access to any native function and Java method of the test target for testing purposes. This mechanism will be described with reference to Fig. 3.

Fig. 3 shows a schematic diagram of a dynamically built distributed test framework 300, which illustrates the process of test wrapper creation and remote procedure calls, according to an embodiment of the invention.

With reference to Fig. 3, off-card representations stored in the unit test interface module 110 (that is, the dynamically built test framework part) are test wrapper classes and/or methods 113 (for short "wrappers"), which may be generated as Java methods based on input 211 received from the test target 200.

As shown in Fig. 3, the wrappers 113 (classes and methods) are created at the unit-test representations module 110 by a separate build step or task, such as, create test wrapper, 112. The input to this task comprises at least the java sources 112-1 of a test target operating system, or native header (^{∗}.h) files 121-2, or source file configuration 112-3 for the test target to build.

Preferably, the source file configuration 112-3 contains the file list to be built as well as a subset of interface files that is considered for the creation of test wrappers.

The create test wrapper step 112 produces a wrapper for each Java file and native headers that is visible to the build. The created wrapper is the interface to the method/function under test. It encapsulates the remote procedure call to the test target. During the off-card build of the unit tests, the generated wrappers are imported.

During execution of the unit-test by the unit-test module 130 (unit test execution step), the wrapper method calls its on-card original function or (Java-) method via a Remote Procedure Call (RPC) 111 and sends a corresponding APDU 121 to the test target 200.

The create test wrapper step 112 and the unit test execution step 130 may be implemented as Gradle tasks, allowing thus to use known unit-test frameworks implementation kits such as Groovy-, Java- or Kotlin-based.

As described above, the implementation of the wrapper methods performs a Remote Procedure Call (RPC) to the on-card test target. In an implementation embodiment this is realized by invoking a unit-test client 120 within the off-card test framework 100.

The unit-test client 120 is communicatively coupled to the unit-test interface module 120 and configured to receive the remote procedure call 111 from the unit-test interface module 110. At the unit-test client 120 method characteristics are encoded to messages. Method characteristics may include, among others, parameter values, function/method name, parameter- and return type of the RPC.

Further, the unit-test client 120 is configured to establish communication with the test target 220 and to send the messages to the test target 220. Preferably, the RPC message is sent to the test target 200 through test specific APDU (Application Protocol Data Unit) commands 121. A test specific APDU command may refer to an APDU command that features a proprietary class byte and that can be processed by a (unit-)test target.

As described above, the unit test interface module 110 is responsible for dynamically creating the off-card representation of on-card functions/methods under test. The unit-test client 120 is responsible for establishing communication to the test target 200 and sending byte-encoded RPC to the test target 200.

The off-card test framework 100 comprises a further component, the unit-test module 130, which is responsible for executing unit tests. A basic functionality module 115, which is part of the unit-test interface 110 provides basic functionality 132, 133 to the unit-test module 115 for unit-test execution. Preferably the basic functionality comprises library methods for data structure access and exception handlings. Further methods and/or classes needed for smartcard related unit tests might be included as well. In this way, unit-tests can be written off-card with well-established unit-test frontends, such as Spock or JUnit toolkits, while the unit-tests are instructed to be actually run directly on the test target.

On the test target 200 there are several entities located. Preferably, the test target 200 comprises a function under test block 210, and a unit-test server 220, as part of a test library, which is an extension to the operating system. An example of such a function under test block is the Java Card Kernel. However, the function under test is not limited to the Java Card Kernel and other functionalities of the on-card device can be tested using the framework of the present invention as well.

The test target is a variant of the operating system specifically built for the sole purpose of being used for unit-testing. As with all test frameworks, some functionality under test is not suitable to be tested as is. Therefore, some sources of the operating system are replaced by customized doubles. Those source code modifications are switched by a specific pre-compiler directive. An example of such a code adaption is the dispatching of APDUs. Unit-test targets can process unit-test specific APDUs that feature a proprietary class byte. Such modifications of the code under test are only to such an extent that the modified code under test is still loadable and executable on cards and other hardware devices with limited memory and computation resources. The limitation - that either only hardware independent code may be tested on a PC, or both hardware-dependent code as well as the test framework must be located on the smartcard - is no longer of concern.

The test target 200 may implement a unit-test server 220 to provide handling of remote procedure calls by the unit-test running on the off-card device 10.

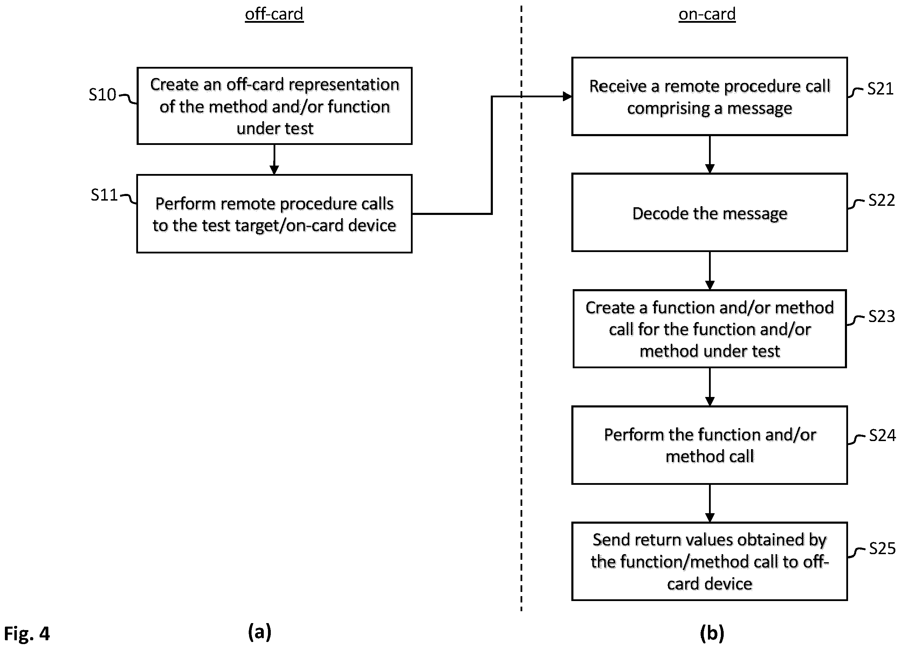

The unit-test server 220 is the counterpart component to the unit-test client 120 of the off-card test framework 100. The unit-test server 220 may receive the message APDUs from the unit-test client 120, decode the received message, and create using input from the decoded message (e.g., method characteristics such as parameter values, function/method name, parameter- and return-types) a function- or method-call of the function/method to test and perform this call. The functionality of the unit-test server will be described below in connection with Fig. 4.

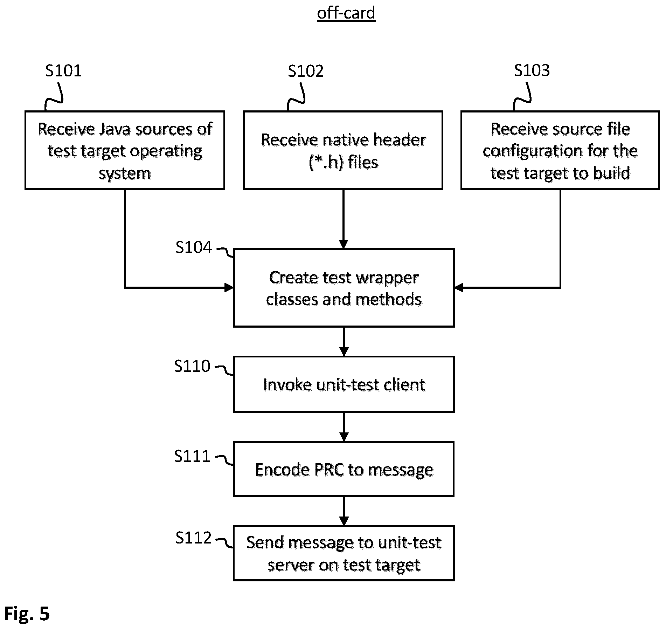

Fig. 4 shows a flowchart for a method for executing a unit test on the distributed framework in Fig. 2, according to an embodiment of the invention. Fig. 4(a) shows the main steps of the off-card part of the method. A preferred implementation of the off-card main steps is presented with reference to Fig. 5. Fig. 4(b) shows the main steps of the on-card part of the method.

With reference to Fig. 4(a), in a first step S10, an off-card representation of the method and/or function under test is created at the unit-test interface module 110.

A preferred implementation of step S10 is shown in Fig. 5. The off-card representation may be created by a separate build step S104, such as create test wrapper, based on input received (in steps S101, S102, S103) from the test target 200. In particular, the create test wrapper task creates an off-card representation of the method and/or function under test as a Java wrapper method based on at least java sources of a test target operating system, or native header files or source file configuration for/of the test target. These input files might be received within in single step or alternatively in separate steps (as depicted in Fig. 5).

The implementation of the wrapper methods created in step S10, performs in step S11 a remote procedure call, RPC, to the test target to cause execution of a unit test for the function and/or method under test. In an embodiment, with reference to Fig. 5, the RPC invokes (S110) the off-card unit-test client 120, where method characteristics such as parameter values, function name, method name, parameter- and return-types, are encoded to one or more messages in step Sill. In step S112, the unit-test client 120 sends the message(s) to the unit-test server 220 located on the test target 200, preferably through test specific APDU command 121.

The method performed on the side of the device/on-card test target 200 is shown in Fig. 4(b).

In step S21, the remote procedure call, which was send as test specific APDU command by the unit-test client 120, is received at the unit-test server 220. In step S22, the unit-test server 220 decodes the message within the APDU command. Based on the decoded information, the unit-test server 220 creates in step S23, a function and/or method call corresponding to the function and/or method under test. In step S24, the function and/or method call is executed on the test target 200. The result of executing the call may be transmitted back within an APDU response command in step S25. Therewith the return values retrieved from the function and/or method execution is transferred to the unit-test client 120. Alternatively, in case of a failed function/method call at the test target, thrown exceptions or detected errors may be returned to the unit-test client 120.

The aspects and embodiments described herein eliminate the restriction that testing code and code under test have to be loaded and executed on the same target, that being the PC or the smartcard.

The described test framework allows to write unit-tests with existing public test frameworks (e.g., JUnit and Spock) on general purpose PC machines and execute the actual unit-test on any target hardware.

In particular:
- Developers can use widespread and popular public test frameworks to write their tests. This saves test development efforts, allows for test reusability and increases test compatibility for different hardware targets. Thus all features provided by public test framework such as execution, reporting, etc. are supported.
- Both, Java methods and native function can be tested using the same test framework.
- Both, Java methods and native function can be tested in card simulation and on the card.
- Large parts of the code under test are executed in a card system very similar to the one after card issuance. Thus the test results are significantly more relevant to the code's future real-life use-cases.
- Unit-tests running on the real smartcard can easily be run automatically within a Continuous-Integration environment, which offers a significant improvement to the quality of the product development processes.
- Functions and methods added or changed are automatically prepared for unit test by build.

In the foregoing specification, the invention has been described with reference to specific embodiments thereof. It will, however, be evident that various modifications and changes may be made thereto without departing from the broader scope of the invention. For example, the above-described process flows are described with reference to a particular ordering of process actions. However, the ordering of many of the described process actions may be changed without affecting the scope or operation of the invention. The specification and drawings are, accordingly, to be regarded in an illustrative rather than restrictive sense.

## Claims

1. A test framework (100) for executing unit tests on a test target (200), the test framework (100) comprising a unit-test interface module (110), the unit-test interface module (110) storing off-card representations of a plurality of test target functions and/or methods under test, the off-card representations being generated by a build step and configured to perform remote procedure calls (111) to the test target (200) to cause execution of unit tests for the test target functions and/or methods under test on the test target (200).

2. The test framework (100) according to claim 1, wherein the off-card representations are wrapper methods (113) generated based on input (211) received from the test target (200).

3. The test framework (100) according to claim 2, wherein the input (211) received from the test target (200) comprises at least sources of a test target operating system, or native header files, or source file configuration for the test target (200).

4. The test framework (100) according to any one of claims 1 to 3, further comprising a unit-test client (120) communicatively coupled to the unit-test interface module (110), wherein the unit-test client (120) is configured to receive the remote procedure calls (111) from the unit-test interface module (110), to encode the remote procedure calls (111) to a message, and to send the message to a unit-test server (220) located on the test target (200).

5. The test framework (100) according to claim 4, wherein the unit-test client (120) is configured to send the message to the test target through test specific APDU commands (121).

6. The test framework (100) according to any one of claims 1 to 5, further comprising a unit-test module (130) for unit-test execution communicatively coupled to the unit-test interface module (110), and a basic functionality module (115) within the unit-test interface (110) providing basic functionality (131, 132) for executing unit tests, wherein the basic functionality comprises library methods for data structure access and exception handlings.

7. A distributed test framework (300) for executing a unit test for a method and/or function under test on a test target (200) comprising:
- the test framework (100) according to any one of claims 1 to 6, as an off-card test framework; and
- an on-card test framework, comprising the test target (200).

8. The distributed test framework (300) according to claim 7, wherein the on-card test framework (200) comprises a unit-test server (220) communicatively coupled to the unit-test client (120) of the off-card test framework (100), the unit-test server (220) being configured to:
- receive from the unit-test client (120) test specific APDU commands (121) comprising a message;
- decode the message;
- create a function and/or method call corresponding to the function and/or method under test; and
- perform the function and/or method call on the test target (200).

9. The distributed test framework (300) according to claim 8, wherein the unit-test server (220) is further configured upon performing the function and/or method call on the test target (200) to send results obtained from the performed function and/or method call within APDU commands (221) to the unit-test client (120).

10. A method for executing a unit test for a method and/or function under test on a test target (200), the test target (200) being on a device under test (20), in particular a smartcard, the method comprising:
- at an off-card device (10) creating (S10) an off-card representation of the method and/or function under test; and
- at the off-card device (10) performing (S11) by the off-card representation a remote procedure call to the test target (200) to cause execution of a unit test for the function and/or method under test on the test target (200) at the device under test (20)

11. The method according to claim 10, wherein the off-card representation of the method and/or function under test is created (S104) as a wrapper method based on input received (S101, S102, S103) from the test target (200), in particular, based on at least sources (112-1) of a test target operating system, or native header files (112-2), or source file configuration (112-3) for the test target (200).

12. The method according to claim 11, wherein the remote procedure call is performed (S11) by the wrapper method by invoking (S110) an off-card unit-test client (120) for encoding (S111) the remote procedure call to a message, and sending (S112) the message to a unit-test server (220) located on the test target (200), preferably through test specific APDU commands (121).

13. The method according to any one of claims 11 to 13, comprising at the test target (200) on the device under test:
- receiving (S21) the remote procedure call as a test specific APDU command comprising a message;
- decoding (S22) the message;
- creating (S23) a function and/or method call of the function and/or method under test; and
- performing (S24) the function and/or method call on the test target (200).

14. The method according to claim 13, further comprising at the test target (200) sending (S25) values obtained from the function and/or method call within APDU commands (221) to the off-card device (10).

15. The test framework (100) according to any one of claims 1 to 6, the distributed test framework (300) according to any one of claims 7 to 9, or the method according to any one of claims 10 to 14, wherein the test target (200) is a variant of an operating system of a device under test (20), in particular a smartcard or Java card, the test target (200) comprising source code modifications of the operating system, such as dispatching APDU commands, the modifications being handled by pre-compiler directives.
